# EUROPEAN PATENT SPECIFICATION

(11) **EP 4 574 446 B1**
(45) Date of publication and mention of the grant of the patent: **02.12.2026**
(21) Application number: 23220173.1
(22) Date of filing: 22.12.2023
(51) Int. Cl.: B60B 27/02, B60B 35/00, B60B 35/04, B62K 25/02

(54) **HIGHLY ADAPTIVE BICYCLE THROUGH AXLE**
HOCHADAPTIVE FAHRRADDURCHGANGSACHSE
BICYCLETTE À AXE TRAVERSANT HAUTEMENT ADAPTATIVE

(43) Date of publication of application: 25.06.2025
(73) Proprietor: Glory Wheel Enterprise Co., Ltd., Taichung City 42880 (TW)
(72) Inventor: LEE, Chien-Hao, 42880 Taichung City (TW)
(74) Representative: Cabinet Chaillot

(56) References cited:
- EP-B1- 1 452 435
- TW-U- M 543 199
- US-A1- 2017 239 984
- US-A1- 2020 290 400
- US-B1- 8 820 853

## Description

### FIELD OF INVENTION

A bicycle through axle.

### BACKGROUND OF THE INVENTION

Known for their safety due to their ability to withstand greater torque and reduce the likelihood of wheel detachment, through axles have gradually replaced traditional quick releases and have become a rapidly evolving feature on modern bicycles. In particular, conical interface through axles are commonly used due to their larger locking surface area, which provides more stable support. Yet, the multitude of non-interchangeable specifications for existing conical interface through axles makes compatibility with different frame dropouts or seats difficult, resulting in elevated production costs and making it difficult for users to identify and select an appropriate through axle for their bicycles. Therefore, creating a highly adaptive bicycle through axle that is compatible with diverse specifications has become a keenly pursued goal in the related field.

US2020290400A1 disclosed a conventional bicycle axle with a spindle which formed a large head at a head end, and the large head is a cylinder toward the head end and defines a cylindrical surface, and a washer, comprising ai inner surface and an outer surface.

### SUMMARY OF THE INVENTION

To remedy the problem of increased production costs and difficulty for users in identifying and selecting the appropriate bicycle axle due to the multitude of axle specifications, the present invention provides a highly adaptive bicycle axle.

The present invention provides a highly adaptive bicycle through axle, comprising: a spindle, including a tail end and a head end defined at two ends; the head end includes a large head, which is a cylinder toward the head end, defining a cylindrical surface; and a washer, including an inner surface and an outer surface; characterized in that the large head is inwardly recessed toward the tail end to form a conical interface that forms a first angle with an axial direction of the spindle; and the inner surface corresponds to the conical interface and the outer surface forms a second angle with the axial direction, the first and second angles being different.

Wherein, the angular range of the second angle may be between 40° and 140°.

Further, the washer may be ring-shaped, with a circumferential surface having an opening.

Further, the inner surface of the washer may have a recess, in which a lubricating component is placed.

Preferably, the inner surface of the washer may have a recess, in which lubricating grease is stored.

Further, the outer surface of the spindle may have one or more protrusions so that the outer surface of the washer contacts the protrusions and rotates only around the spindle.

Moreover, the washer may completely cover the cylindrical surface and the conical interface of the large head.

Through the above technical means, the present invention achieves adaptability to many bicycle specifications by simply changing the characteristics of the washer, thereby reducing production costs and making it more convenient for users.

### BRIEF DESCRIPTION OF THE DRAWINGS

FIG. 1 is a perspective view of a first embodiment of the present invention;
FIG. 2 is a partially enlarged sectional view of the first embodiment of the present invention;
FIG. 3 is a partially enlarged perspective view of a second embodiment of the present invention;
FIG. 4 is a partially enlarged sectional view of a third embodiment of the present invention;
FIG. 5 is a partially enlarged sectional view of a fourth embodiment of the present invention;
FIG. 6 is a partially enlarged sectional view of the first embodiment of the present invention;
FIG. 7 is a partially enlarged sectional view of a fifth embodiment of the present invention; and
FIG. 8 is a partially enlarged sectional view of a sixth embodiment of the present invention.

### DETAILED DESCRIPTION OF THE PREFERRED EMBODIMENTS

In order to more clearly illustrate the technical solutions of the embodiments of the present invention, the accompanying drawings used in the description of each embodiment are briefly introduced herein. It will be appreciated that the accompanying drawings described below are merely some examples or embodiments of the present invention, and that the present invention may be applied to other similar situations by those skilled in the art without the need for creative effort. Unless otherwise clearly indicated or explained by the context, the same reference numbers in the drawings represent the same structures or operations.

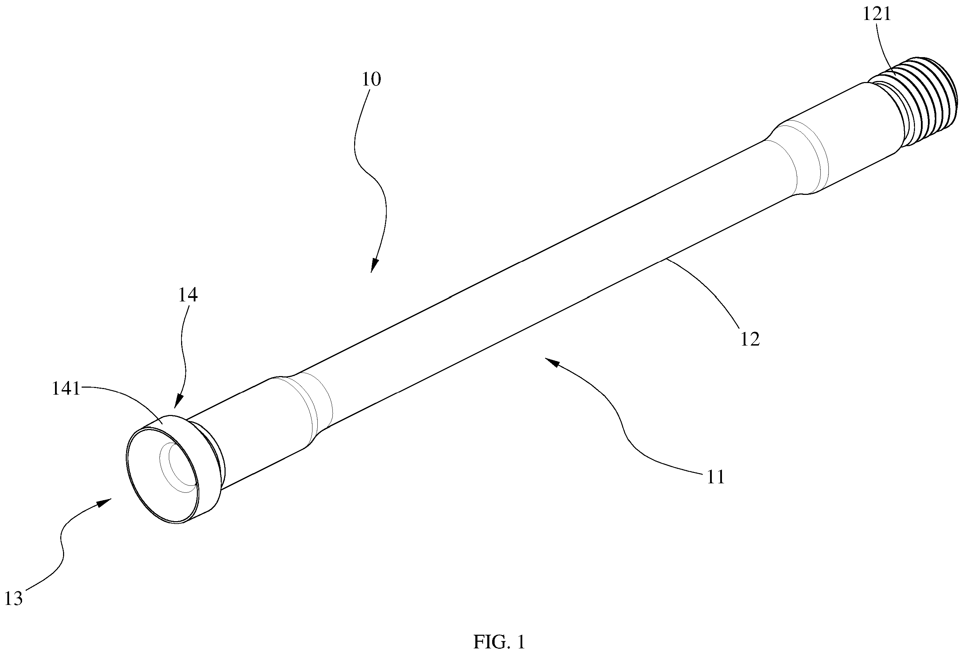

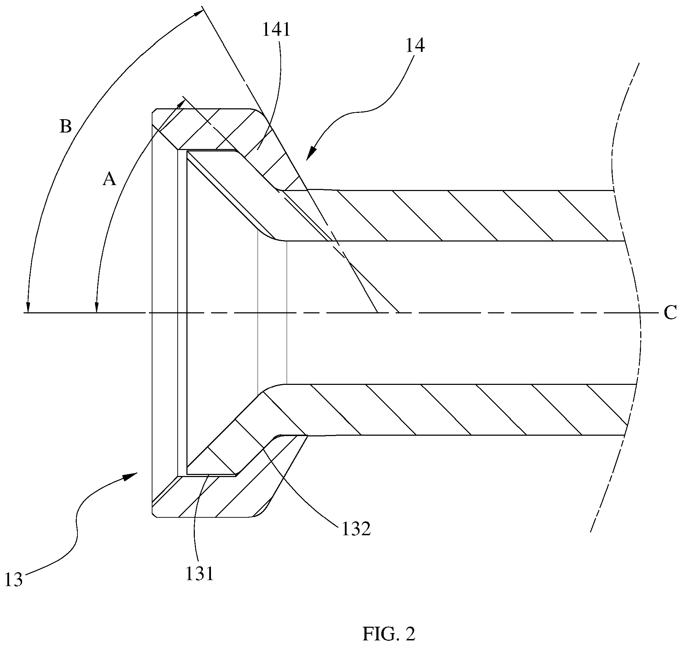

Referring to FIGS. 1 and 2, a first embodiment of a highly adaptive bicycle through axle 10 provided by the present invention is shown. The highly adaptive bicycle through axle 10 includes a spindle 11 having a tail end and a head end defined at two ends, wherein the tail end has a threaded surface 121 formed on an outer surface 12; the head end includes a large head 13, which is a cylinder toward the head end and defines a cylindrical surface 131; the large head 13 is inwardly recessed toward the tail end to form a conical interface 132 that forms a first angle A with an axial direction C of the spindle 11; the highly adaptive bicycle through axle 10 also includes a washer 14, and the washer 14 comprises an inner surface and an outer surface, wherein the inner surface corresponds to the conical interface 132 and the outer surface forms a second angle B with the axial direction C, and the first angle A and the second angle B are different, with the second angle B corresponding to a slanted surface of a bicycle fork used to secure the through axle; wherein the angular range of the second angle B is between 40° and 140°.

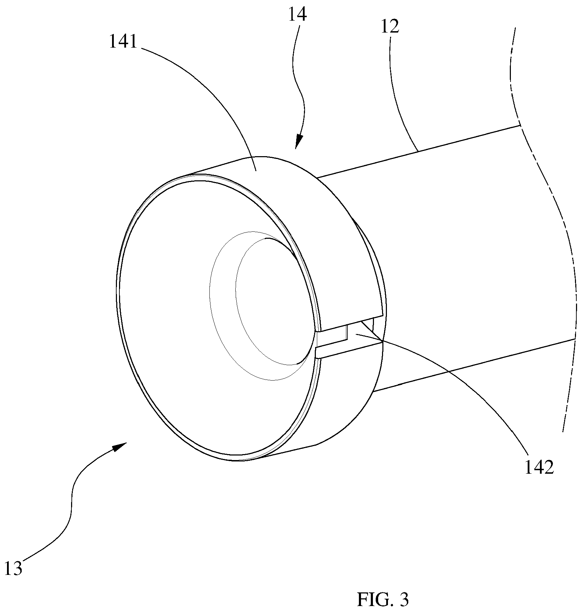

Referring to FIG. 3, a second embodiment of the highly adaptive bicycle through axle 10 provided by the present invention is shown. An opening 142 is provided on a circumferential surface 141 of the washer 14. The opening 142 can expand when a force is applied, making it easier to install or remove the washer 14 onto or from the conical interface 132 of the spindle 11.

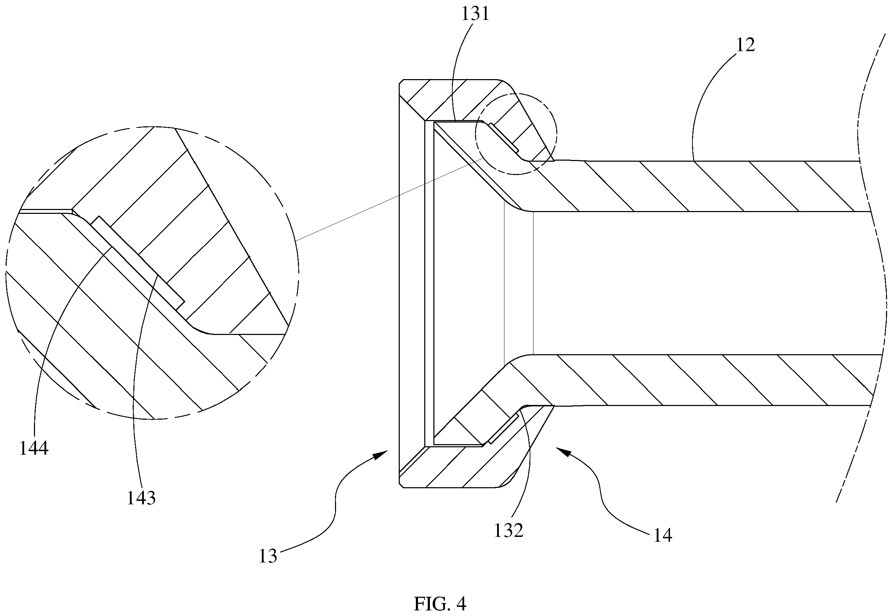

Referring to FIG. 4, a third embodiment of the highly adaptive bicycle through axle 10 provided by the present invention is shown. In this embodiment, the inner surface of the washer 14 includes a recess 143, in which a lubricating component 144 is placed. The lubricating component 144 can be any material that reduces the friction between the washer 14 and the conical interface 132. Preferably, the lubricating component 144 is a polytetrafluoroethylene tape or a lubricating grease.

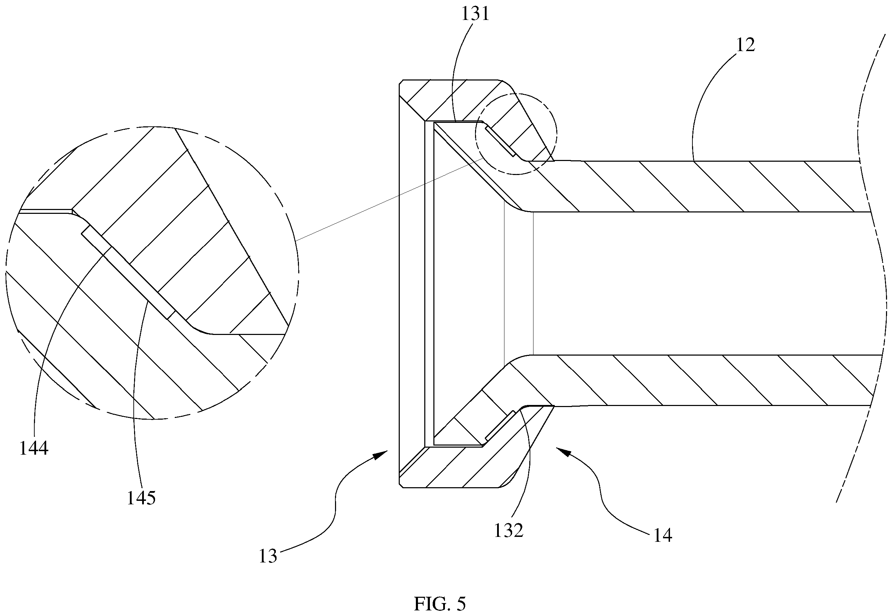

Referring to FIG. 5, a fourth embodiment of the highly adaptive bicycle through axle 10 provided by the present invention is shown. In this embodiment, the conical interface 132 of the large head 13 includes a recess 145, in which the lubricating component 144 is placed. The lubricating component 144 can be any material that reduces the friction between the conical interface 132 and the washer 14. Preferably, the lubricating component 144 is a polytetrafluoroethylene tape or a lubricating grease.

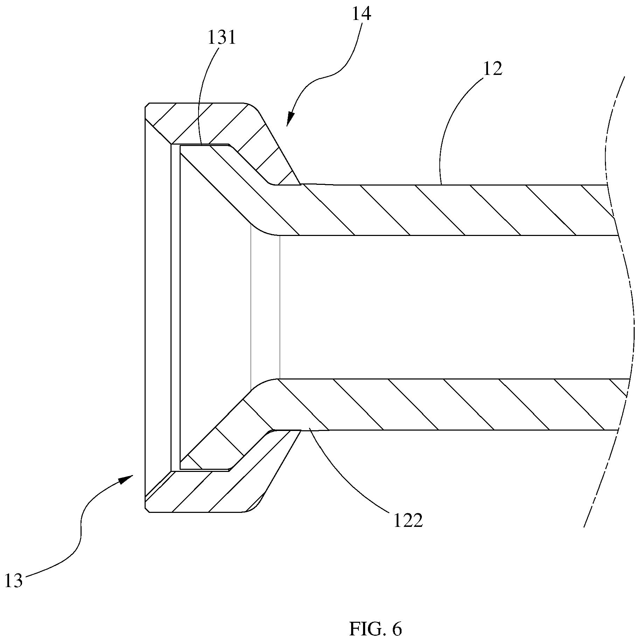

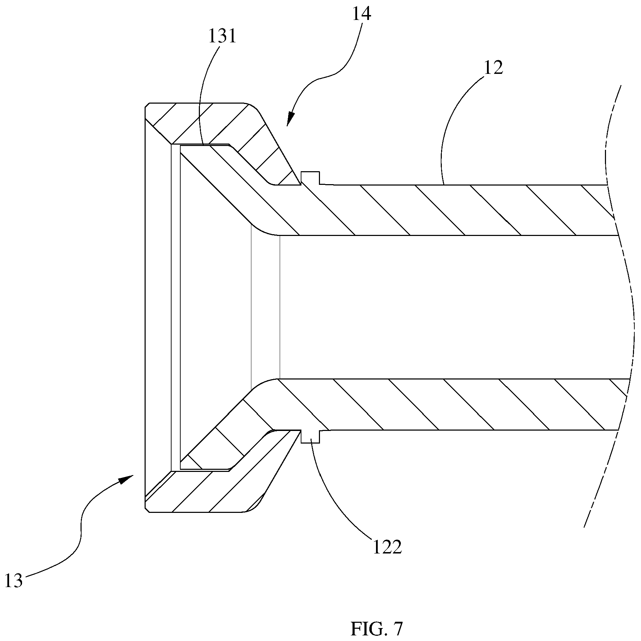

Further, reference is made to FIGS. 6 and 7, which are embodiments of the highly adaptive bicycle through axle 10 provided by the present invention, namely the first embodiment and a fifth embodiment, respectively. Referring to FIG. 5, in the first embodiment, the outer surface 12 of the spindle 11 in the vicinity of the large head 13 has four protrusions 122, the outer surface of the washer 14 can rest against these protrusions 122 so that the inner surface of the washer 14 is fixedly attached to the conical interface 132 of the large head 13 and can rotate only along the axial direction C and cannot slide arbitrarily on the outer surface 12 of the spindle 11. Referring to FIG. 6, in the further embodiment, the outer surface 12 of the spindle 11 near the large head 13 has two larger protrusions 122 so that the inner surface of the washer 14 to be fixedly attached to the conical interface 132 of the large head 13 and not slide. The protrusions 122 facilitate the user in installing the washer 14 and prevent it from slipping when installing the highly adaptive bicycle through axle 10 on a bicycle.

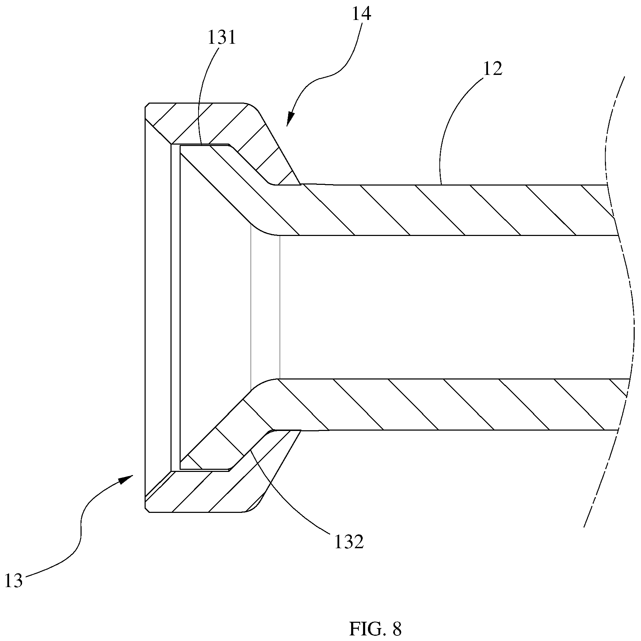

Reference is further made to FIG. 8, which shows a sixth embodiment of the highly adaptive bicycle through axle 10 provided by the present invention. Because the inner surface of the washer 14 completely covers the conical interface 132 and the cylindrical surface 131 of the large head 13, this embodiment of the washer 14 has a larger contact surface with the large head 13, thereby reducing the likelihood that the washer 14 will inadvertently become detached.

From the aforementioned descriptions, it can be known that the present invention achieves the following effects:

1. In manufacturing the through axle spindle, it is no longer necessary to make additional molds and design different specifications for different standards. Only one type of through axle needs to be produced, and it can be adapted to different bicycle application requirements by pairing it with a customizable washer whose outer surface corresponds to the conical interface of different bicycle fork through axle fixings.

2. Users no longer need to worry about using through axles with mismatched specifications, and since the through axle spindle does not need to be customized for different bicycle standards, this significantly reduces production costs, allowing users to choose more economical through axles.

## Claims

1. A highly adaptive bicycle through axle (10), comprising:
a spindle (11), with a tail end and a head end defined at two ends; the head end comprises a large head (13), and the large head (13) is a cylinder toward the head end and defines a cylindrical surface (131); and
a washer (14), comprising an inner surface and an outer surface (12),;
**characterized in that**
the large head (13) is inwardly recessed (143, 145) toward the tail end to form a conical interface (132) that forms a first angle (A) with an axial direction (C) of the spindle (11); and
the inner surface corresponds to the conical interface (132), and the outer surface (12) forms a second angle (B) with the axial direction (C), and the first and second angle (B)s are different.

2. The highly adaptive bicycle through axle (10) according to claim **1,** wherein the angular range of the second angle (B) is between 40° and 140°.

3. The highly adaptive bicycle through axle (10) according to claim 2, wherein the washer (14) is ring-shaped, with a circumferential surface (141) having an opening (142).

4. The highly adaptive bicycle through axle (10) according to claim 2, wherein the inner surface of the washer (14) has a recess (143, 145), and a lubricating component (144) is placed in the recess (143, 145).

5. The highly adaptive bicycle through axle (10) according to claim 3, wherein the inner surface of the washer (14) has a recess (143, 145), and a lubricating grease is stored in the recess (143, 145).

6. The highly adaptive bicycle through axle (10) according to claim 2, wherein the conical interface (132) of the large head (13) has a recess (143, 145), and a lubricating component (144) is placed in the recess (143, 145).

7. The highly adaptive bicycle through axle (10) according to claim 3, wherein the conical interface (132) of the large head (13) has a recess (143, 145), and a lubricating grease is stored in the recess (143, 145).

8. The highly adaptive bicycle through axle (10) according to claim 3, wherein the outer surface (12) of the spindle (11) has at least one protrusion (122) so that the outer surface (12) of the washer (14) contacts the protrusion (122) and rotates only around the spindle (11).

9. The highly adaptive bicycle through axle (10) according to claim 3, wherein the washer (14) completely covers the cylindrical surface (131) and the conical interface (132) of the large head (13).

## Patentansprüche

1. - Hochadaptive Fahrradsteckachse (10), umfassend:
eine Spindel (11), wobei ein hinteres Ende und Kopfende an zwei Enden definiert sind; das Kopfende einen großen Kopf (13) umfasst, und der große Kopf (13) ein Zylinder zu dem Kopfende hin ist und eine zylindrische Fläche (131) definiert; und
eine Unterlegscheibe (14), umfassend eine Innenfläche und eine Außenfläche (12);
**dadurch gekennzeichnet, dass**
der große Kopf (13) zu dem hinteren Ende hin einwärts ausgespart (143, 145) ist, um eine konische Grenzfläche (132) zu bilden, die mit einer axialen Richtung (C) der Spindel (11) einen ersten Winkel (A) bildet; und
die Innenfläche der konischen Grenzfläche (132) entspricht und die Außenfläche (12) mit der axialen Richtung (C) einen zweiten Winkel (B) bildet, und der erste und der zweite Winkel (B) verschieden sind.

2. - Hochadaptive Fahrradsteckachse (10) nach Anspruch 1, wobei der Winkelbereich des zweiten Winkels (B) zwischen 40° und 140° ist.

3. - Hochadaptive Fahrradsteckachse (10) nach Anspruch 2, wobei die Unterlegscheibe (14) ringförmig ist, eine Umfangsfläche (141) eine Öffnung (142) aufweist.

4. - Hochadaptive Fahrradsteckachse (10) nach Anspruch 2, wobei die Innenfläche der Unterlegscheibe (14) eine Aussparung (143, 145) aufweist und eine Schmierkomponente (144) in der Aussparung (143, 145) platziert ist.

5. - Hochadaptive Fahrradsteckachse (10) nach Anspruch 3, wobei die Innenfläche der Unterlegscheibe (14) eine Aussparung (143, 145) aufweist und ein Schmierfett in der Aussparung (143, 145) gespeichert ist.

6. - Hochadaptive Fahrradsteckachse (10) nach Anspruch 2, wobei die konische Grenzfläche (132) des großen Kopfs (13) eine Aussparung (143, 145) aufweist und eine Schmierkomponente (144) in der Aussparung (143, 145) platziert ist.

7. - Hochadaptive Fahrradsteckachse (10) nach Anspruch 3, wobei die konische Grenzfläche (132) des großen Kopfs (13) eine Aussparung (143, 145) aufweist und ein Schmierfett in der Aussparung (143, 145) gespeichert ist.

8. - Hochadaptive Fahrradsteckachse (10) nach Anspruch 3, wobei die Außenfläche (12) der Spindel (11) mindestens einen Vorsprung (122) aufweist, sodass die Außenfläche (12) der Unterlegscheibe (14) den Vorsprung (122) berührt und nur um die Spindel (11) dreht.

9. - Hochadaptive Fahrradsteckachse (10) nach Anspruch 3, wobei die Unterlegscheibe (14) die zylindrische Fläche (131) und die konische Grenzfläche (132) des großen Kopfs (13) vollständig bedeckt.

## Revendications

1. - Axe traversant de vélo (10) hautement adaptable, comprenant :
une tige (11), avec une extrémité arrière et une extrémité avant définies à deux extrémités ; l'extrémité avant comprend une grande tête (13), et la grande tête (13) est un cylindre vers l'extrémité avant et définit une surface cylindrique (131) ; et
une rondelle (14), comprenant une surface intérieure et une surface extérieure (12).
**caractérisé par le fait que**
la grande tête (13) est renfoncée vers l'intérieur (143, 145) vers l'extrémité arrière pour former une interface conique (132) qui forme un premier angle (A) avec une direction axiale (C) de la tige (11) ; et
la surface intérieure correspond à l'interface conique (132), et la surface extérieure (12) forme un second angle (B) avec la direction axiale (C), et les premier et second angles (B) sont différents.

2. - Axe traversant de vélo (10) hautement adaptable selon la revendication 1, dans lequel la plage angulaire du second angle (B) est comprise entre 40° et 140°.

3. - Axe traversant de vélo (10) hautement adaptable selon la revendication 2, dans lequel la rondelle (14) est de forme annulaire, avec une surface circonférentielle (141) ayant une ouverture (142).

4. - Axe traversant de vélo (10) hautement adaptable selon la revendication 2, dans lequel la surface intérieure de la rondelle (14) a un évidement (143, 145), et un composant lubrifiant (144) est placé dans l'évidement (143, 145).

5. - Axe traversant de vélo (10) hautement adaptable selon la revendication 3, dans lequel la surface intérieure de la rondelle (14) a un évidement (143, 145), et une graisse lubrifiante est stockée dans l'évidement (143, 145).

6. - Axe traversant de vélo (10) hautement adaptable selon la revendication 2, dans lequel l'interface conique (132) de la grande tête (13) a un évidement (143, 145), et un composant lubrifiant (144) est placé dans l'évidement (143, 145).

7. - Axe traversant de vélo (10) hautement adaptable selon la revendication 3, dans lequel l'interface conique (132) de la grande tête (13) a un évidement (143, 145), et une graisse lubrifiante est stockée dans l'évidement (143, 145).

8. - Axe traversant de vélo (10) hautement adaptable selon la revendication 3, dans lequel la surface extérieure (12) de la tige (11) a au moins une saillie (122) de telle sorte que la surface extérieure (12) de la rondelle (14) entre en contact avec la saillie (122) et tourne uniquement autour de la tige (11).

9. - Axe traversant de vélo (10) hautement adaptable selon la revendication 3, dans lequel la rondelle (14) recouvre entièrement la surface cylindrique (131) et l'interface conique (132) de la grande tête (13).
